# EUROPÄISCHE PATENTSCHRIFT

(11) **EP 1 657 019 B1**
(45) Veröffentlichungstag und Bekanntmachung des Hinweises auf die Patenterteilung: **19.03.2008**
(21) Anmeldenummer: 05450168.9
(22) Anmeldetag: 12.10.2005
(51) Int. Cl.: B23K 20/12

(54) **Verfahren zum Verbinden von Schienen durch Reibschweissen**
Method of joining rails by friction welding
Procédé d'assemblage des rails par soudage par friction

(30) Priorität: 04.11.2004 AT 18432004
(43) Veröffentlichungstag der Anmeldung: 17.05.2006
(73) Patentinhaber: voestalpine Schienen GmbH, 8700 Leoben (AT)
(72) Erfinder: Pfeiler, Johann, 8700 Leoben (AT)
(74) Vertreter: Wildhack, Helmut

(56) Entgegenhaltungen:
- EP-A- 1 459 833
- WO-A-20/04028733
- DE-A1- 3 307 445
- DE-A1- 19 807 457
- GB-A- 1 293 531

## Beschreibung

Die Erfindung bezieht sich auf ein Verfahren zum metallischen Verbinden von profilierten Schienen in Längsrichtung, beispielsweise Eisenbahnschienen, Träger oder dergleichen, durch Reibschweißen, wobei in einem ersten Schritt eine Erwärmung der Schienenenden auf eine Verbindungstemperatur durch aneinanderandrücken bei gleichzeitigem Bewegen der Stirnflächen relativ zueinander und in einem zweiten Schritt ein Verbinden der Schienen nach einem Ausrichten der Konturen bzw. der Querschnitte durch ein Aneinanderpressen der Stirnflächen erfolgen.

Ein metallisches Verbinden der Stirnflächen von Stäben kann mit Vorteil durch Reibschweißen erfolgen, wobei eine Erwärmung der aneinanderangedrückten Stirnflächen bzw. ein Wärmeeinbringen in die Stabenden durch ein relatives Bewegen derselben zueinander erreicht werden.

Die Relativbewegung kann als Drehbewegung mindestens eines Stabes mit einer vom gegenüberliegenden Stab unterschiedlichen Drehzahl und/oder Drehrichtung um die gemeinsame Achse erreicht werden, oder es werden mindestens eines der Stabenden senkrecht zur Achse im Vergleich mit dem gegenüberliegenden ungleich gerichtet hin und her und/oder kreisend bzw. orbital bewegt.

Insbesondere für lange Stäbe mit jeweils hoher Masse ist es vorteilhaft für ein Erwärmen der zu verbindenden Stabenden diese im Wesentlichen senkrecht zur Achse, also nicht rotierend, relativ zueinander zyklisch zu bewegen.

Ein Reibschweißverfahren und eine Vorrichtung zum Reibschweißen von Rohren ist aus der US 5 697 545 bekannt, wobei zwei Rohrteile stirnseitig mit einer Druckbeaufschlagung aneinander angestellt werden und eine relative Oszillationsbewegung der Stirnflächen zur Erwärmung des Verbindungsbereiches mittels magnetostriktivem Transducer erfolgt.

Ein Verfahren und ein Schwingschweißkopf zum Reibschweißfügen oder Entgraten technischer Bauteile mit beliebiger Kontur der zu verschweißenden Flächen ist aus der EP 0 707 919 A1 bekannt geworden. Der Reibschweißkopf ist vorschlagsgemäß mit einem Steuerexzenter und einer Parallelführung ausgerüstet, durch die eine eingangsseitige Rotationsenergie in eine zirkulare, parallelgeführte Bewegungsenergie umsetzbar ist. Nach dem Verfahren wird für den Erwärmungsvorgang ein Bauteil mittels eines Schwingschweißkopfes um das Zentrum des festen Bauteiles in Reibverbindung geringfügig bewegt.

In der GB 1 293 531 ist ein Reibschweißverfahren offenbart, nach welchem im Erwärmungsschritt die aneinanderangestellten Stirnflächen der Stabenden relativ orbital bewegt werden. Diese relative Orbitalbewegung kann kreisend, ellipsenförmig oder andersartig in einer Form einer Lissajousfigur erfolgen.

Ein Verfahren zum Reibschweißen von Eisenbahnschienen und ähnlichen Trägerprofilen ist aus der DE 198 07 457 A1 bekannt geworden. Anmeldungsgemäß wird vorgeschlagen, ein Zwischenstück zwischen den zu verbindenden Schienenenden linear oder orbital oszillierend zu bewegen, während parallel dazu die beiden festgelegten Schienenenden in Schienenlängsrichtung zueinander an das Zwischenstück gepresst werden, um die zum Schweißen notwendige Wärme durch Reibenergie auf beide Kontaktflächen zwischen je einem Schienenende und je einer Schnittfläche des Zwischenstückes aufzubringen. Eine derartige Verbindung von Schienen weist allerdings verfahrensbedingt zwei Reibschweißverbindungsflächen auf.

Für Schienen mit großer Längserstreckung offenbart die AT 411 883 B ein Verfahren zum metallischen Verbinden der Stirn- bzw. Querschnittsfächen durch Reibschweißen. Nach einem achsnormalen Abrichten der Enden ist für einen Erwärmungsschritt vorgesehen, dass die abgerichteten Querschnittsflächen aneinander angestellt, druckbeaufschlagt und die beiden Schienenenden relativ zueinander entgegengerichtet oszillierend bewegt werden.

Für eine stirnseitige Verbindung von gegebenenfalls profilierten Stäben durch Reibschweißen ist nach dem technischen Stand für die Erwärmung der stimseitigen Enden nicht ausschließlich eine Relativbewegung durch Rotation um die Stabachse erforderlich, es können auch Relativbewegungen der druckbeaufschlagten Querschnittsflächen, die oszillierend, gegebenenfalls orbital oszillierend, sind, verwendet werden.

Ein metallisches Verbinden von Schienen und Trägern durch Reibschweißen mit oszillierenden Relativbewegungen der druckbeaufschlagten Stirnflächen beim Erwärmen kann jedoch große Kräfte für eine Bewegung der Schienenenden und insbesondere einen in der Folge Versatz der Flanschenden, das ist eine örtliche Diskontinuität des Schienenquerschnittes, in Längsrichtung an der Schweißstelle bewirken.

Hier will die Erfindung Abhilfe schaffen und setzt sich zum Ziel, ein Verfahren der eingangs genannten Art anzugeben, das bei verringerten Stellkräften für eine Biegung zur Relativbewegung der Schienenenden eine verbesserte Reibart für eine Energieentwicklung an den Stirnflächen und eine querschnittskonforme hochwertige metallische Verbindung der Schienen sicherstellt.

Dieses Ziel wird bei einem gattungsgemäßen Verfahren dadurch erreicht, dass beim Erwärmungsschritt die Schienenenden schwingend mit einer größten Schwingungsweite senkrecht zur Hauptachsrichtung mit dem maximalen Trägheitsmoment der Querschnittsfäche relativ zueinander bewegt werden.

Aufbauend auf die Lehren der technischen Mechanik, wonach auf Biegung beanspruchte profilierte Stäbe, wie Schienen, zum Beispiel Eisenbahnschienen oder Träger, jeweils im Querschnitt gesehen, Hauptachsen aufweisen, für die das axiale Trägheitsmoment ein Maximum bzw. ein Minimum ist, wobei bestimmend für die Hauptträgheitsmomente die Querschnittsflächenbereiche und deren jeweiliger Normalabstand von den Achsen sind, erfolgten Ermittlungen von Erfordernissen und den Wirkungen von dynamischen Stellkräften beim Reiben von profilierten Flächen.

Zur Energieentwicklung an den Stirnflächen können die Schienenenden in jede Richtung achsnormal schwingend bewegt werden.

Schienen mit einem hohen Biegewiderstand in der Hauptbeanspruchungsrichtung besitzen durchwegs von der Achse weitestmöglich beabstandet auskragende Bereiche, wie Schienenfuß- oder Trägerflansche um eine hohes Trägheitsmoment des Querschnittes, gegebenenfalls bei geringem Gewicht je Längseinheit zu erreichen.

Die Ermittlungen erbrachten, dass bei einem flächigen orbitalen, konzentrischen Reiben der Schienenquerschnittsflächen auskragende Flansche bei Beanspruchung mit einer Kraft-Komponente senkrecht zur Kragrichtung einer vorwiegend elastischen, bei hohen Schwingweiten auch teilweise plastischen Verbiegung unterworfen sind. Weil nun Biegungen der Schienenenden in der Hauptachsrichtung mit dem maximalen Trägheitsmoment diese Flanschbiegungen, welche in der Folge zu einem sogenannten Flanschrattern führen können und geometrische und schweißtechnische Nachteile der metallischen Verbindung bringen, intensivieren können, ist es erfindungswesentlich, die größte Schwingungsweite im Wesentlichen senkrecht zum maximalen Trägheitsmoment der Querschnittsfläche auszurichten.

Es kann von Vorteil sein, wenn beim Erwärmungsschritt die Schienenenden relativ zueinander senkrecht zur Hauptachsrichtung Y mit dem maximalen Trägheitsmoment der Querschnittsfläche im Wesentlichen schwingend bewegt werden.

Bei dickeren konisch zum Ende hin verlaufenden Flanschen kann es auch günstig sein, wenn beim Erwärmungsschritt die Schienenenden relativ zueinander senkrecht zur Hauptachsrichtung Y im Wesentlichen schwingend bewegt werden, welcher Bewegung eine Schwingung mit geringerer Intensität in Richtung der Hauptachse Y überlagert wird. Eine geringe Intensität der Schwingung zum Beispiel 1/4 und weniger in Richtung der Hauptachse kann im Hinblick auf eine homogenflächige Freisetzung von Reibungswärme förderlich sein, wird jedoch durch die geometrische Form der Flansche begrenzt.

Nach einer weiteren bevorzugten Ausführungsform des Verfahrens nach der vorliegenden Erfindung werden beim Erwärmungsschritt die Schienenenden relativ zueinander schwingend torsionsbewegt. Mittels dieser Bewegungsart kann bei geringen Stellkräften eine gezielt intensivierte Wärmeeinbringung in Schienenendenbereiche mit hoher Massekonzentration erreicht werden.

Mit Vorteil ist es auch möglich, über die gesamte Fläche des Schienenquerschnittes eine oszillierende Relativbewegung der Schienenenden zu erreichen, wenn eine Torsionsschwingung mit einem Drehpunkt außerhalb der Schienenquerschnittsflächen verwendet wird.

Eine hohe Flexibilität des Verfahrens im Hinblick auf unterschiedliche Schienenwerkstoffe und auf einer Optimierung der Verschweißgüte der Schienenenden kann weiters erreicht werden, wenn beim Erwärmungsschritt die Schienenenden relativ zueinander senkrecht zur Hauptachsrichtung Y im Wesentlichen translatorisch schwingend bewegt werden, welcher Bewegung eine Torsionsschwingung überlagert wird.

Wird beim erfindungsgemäßen Verfahren zumindest eine der Schienen derart festgelegt, dass deren Endenteil zumindest für eine erzwungene Schwingbewegung im Wesentlichen die Resonanzbedingungen einer harmonischen Schwingung erfüllt, so kann eine wesentliche Verringerung der für die Schwingbewegung aufzuwendenen Kräfte erreicht werden. Obwohl die Reibung der Stirnflächen der Schienenenden zur Erstellung der Wärmeenergie dämpfend auf eine Resonanzschwingung wirkt, konnte überraschend sowohl bei einer translatorischen als auch bei einer Torsionsschwingung eine Verminderung der Schwingungsstellkräfte erreicht werden, wenn die Einspannung im Hinblick auf die Resonanzbedingungen erfolgt.

Es ist auch möglich, beim Erwärmungsschritt eine Relativbewegung der Schienenstirnflächen vorzusehen, wobei die Schwingungen Überlagerungs- bzw. Lissajous-Figuren ergeben, die im Wesentlichen flächenfüllend ausgebildet sind und senkrecht zur Hauptachsrichtung Y mit dem maximalen Trägheitsmoment der Querschnittsfläche die größte Ausdehnung aufweisen. Allerdings wird die Schweißgüte nur gefördert, wenn der Unterschied in der Schwingungsweite in den Hauptachsrichtungen größer ist als 4 zu 1, insbesondere 6 zu 1. Dieser Zusammenhang wurde auch für überlagerte Translationsschwingungen gefunden.

Anhand von schematischen Zeichnungen soll die Erfindung beispielhaft näher dargestellt werden.

Es zeigen:
- Fig. 1: eine Eisenbahnschiene schematisch mit Endposition einer Stirnfläche
- Fig. 1a: Bewegungsvektoren
- Fig. 2: eine Eisenbahnschiene schematisch mit Endposition einer Stirnfläche bei einer Torsionsschwingung
- Fig. 2a: Bewegungsvektoren
- Fig. 3: eine Eisenbahnschiene schematisch mit Endposition einer Stirnfläche bei Torsionsschwingung um einen außerhalb der Querschnittsfläche gelegenen Drehpunkt
- Fig. 3a: Bewegungsvektoren

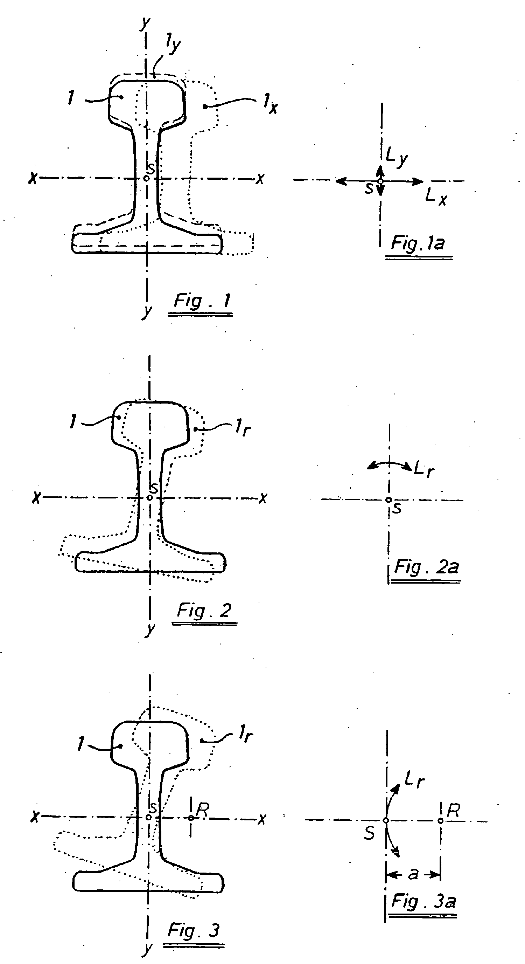

Aus Fig. 1 ist schematisch eine Schiene 1 ersichtlich, welche eine Hauptachsrichtung Y mit dem maximalen Trägheitsmoment besitzt. Durch den Schwerpunkt S der Schienenquerschnittsfläche verläuft senkrecht zur Hauptachsrichtung Y eine Hauptachse X mit dem minimalen Trägheitsmoment.

Eine distanziert festgelegte Schiene 1 wird zur Reibungserwärmung einer Stirnfläche mit einer axial gegenüberliegenden angestellten Schiene erfindungsgemäß in Richtung der Achse X schwingend relativ bewegt, wobei eine einseitig größte Auslenkung (strichliert dargestellt) in einer Position 1 x erreicht wird.

In Fig. 1a sind Bewegungsvektoren bezogen auf den Flächenschwerpunkt S gezeigt. Mit der Bezeichnung Lx ist die Schwingbewegung in Richtung der Achse X, also der Hauptachse mit dem minimalen Trägheitsmoment der Schienenquerschnittsfläche, veranschaulicht. Einer Schwingbewegung X kann eine gleichartige, jedoch wesentlich geringere, vorzugsweise höchstens 1/4, vorzugsweise 1/8, des Wertes betragende Schwingbewegung in Y Richtung, also in Richtung des größten Trägheitsmomentes, überlagert sein.

Fig. 2 zeigt eine Stirnfläche einer Schiene 1, wobei ein Schienenende relativ zum axial gegenüberliegenden Schienenende zur Erzeugung von Reibwärme eine schwingende Torsionsbewegung um die Schwerachse S ausführt. 1 r (punktiert dargestellt) zeigt schematisch eine größte Torsionsauslenkung der Schwingung, die in Fig. 2a als Bewegungsvektor veranschaulicht ist.

Fig. 3 zeigt schematisch eine erzwungene Torsionsschwingung, bei welcher der Schwingungsdrehpunkt R auf einer Hauptachse X mit einem minimalen Trägheitsmoment, jedoch außerhalb der Schienenschwerachse S bzw. außerhalb der Schienenstirnfläche liegt. Bei einer höchsten Torsionsauslenkung stellt sich schematisch eine relative Stirnflächenposition 1 r dar, wobei die Bewegungsvektoren Ly, wie in Fig. 3a veranschaulicht, ein Schwingen der Schwerachse im Querschnitt um einen Drehpunkt R, welcher einem Abstand a zu dieser aufweist, zeigen.

## Patentansprüche

1. Verfahren zum metallischen Verbinden von profilierten Schienen in Längsrichtung, beispielsweise Eisenbahnschienen, Träger oder dergleichen, durch Reibschweißen, wobei in einem ersten Schritt eine Erwärmung der Schienenenden auf eine Verbindungstemperatur durch aneinander andrücken bei gleichzeitigem Bewegen der Stirnflächen relativ zueinander und in einem zweiten Schritt ein Verbinden der Schienen nach einem Ausrichten der Konturen bzw. der Querschnitte durch ein aneinander pressen der Stirnflächen erfolgen, **dadurch gekennzeichnet, dass** beim Erwärmungsschritt die Schienenenden schwingend mit einer größten Schwingungsweite senkrecht zur Hauptachsrichtung Y mit dem maximalen Trägheitsmoment der Querschnittsfläche relativ zueinander bewegt werden.

2. Verfahren nach Anspruch 1, **dadurch gekennzeichnet, dass** beim Erwärmungsschritt die Schienenenden relativ zueinander senkrecht zur Hauptachsrichtung Y mit dem maximalen Trägheitsmoment der Querschnittsfläche im Wesentlichen schwingend bewegt werden.

3. Verfahren nach Anspruch 1 oder 2, **dadurch gekennzeichnet, dass** beim Erwärmungsschritt die Schienenenden relativ zueinander senkrecht zur Hauptachsrichtung Y im Wesentlichen schwingend bewegt werden, welcher Bewegung eine Schwingung mit geringerer Intensität in Richtung der Hauptachse Y überlagert wird.

4. Verfahren nach Anspruch 1, **dadurch gekennzeichnet, dass** beim Erwärmungsschritt die Schienenenden relativ zueinander schwingend torsionsbewegt werden.

5. Verfahren nach Anspruch 4, **dadurch gekennzeichnet, dass** eine Torsionsschwingung mit einem Drehpunkt außerhalb der Schienenquerschnittsflächen verwendet wird.

6. Verfahren nach Anspruch 1, **dadurch gekennzeichnet, dass** beim Erwärmungsschritt die Schienenenden relativ zueinander senkrecht zur Hauptachsrichtung Y im Wesentlichen translatorisch schwingend bewegt werden, welcher Bewegung eine Torsionsschwingung überlagert wird.

7. Verfahren nach einem der Ansprüche 1 bis 6, **dadurch gekennzeichnet, dass** zumindest eine der Schienen derart festgelegt wird, dass deren Endenteil zumindest für eine erzwungene Schwingbewegung im Wesentlichen die Resonanzbedingungen einer harmonischen Schwingung erfüllt.

8. Verfahren nach Anspruch 1, 3 oder 6, **dadurch gekennzeichnet, dass** die Schwingungen Überlagerungs- bzw. Lissajous-Figuren ergeben, die im Wesentlichen flächenfüllend ausgebildet sind und senkrecht zur Hauptachsrichtung Y mit dem maximalen Trägheitsmoment der Querschnittsfläche die größte Ausdehnung aufweisen.

## Claims

1. Method of metallically connecting profiled rails, for example railway rails, girders or the like, in the longitudinal direction by friction welding, wherein heating-up of the rail ends to a connecting temperature takes place in a first step by pressing them against one another with simultaneous movement of the end faces, relative to one another, and connection of the rails takes place in a second step, after alignment of the contours or cross-sections, by pressing said end faces against one another,
**characterised in that**,
during the heating-up step, the rail ends are moved, relative to one another, in a manner oscillating with a greatest amplitude of oscillation perpendicular to the principal-axis direction Y with the maximum moment of inertia of the cross-sectional face.

2. Method according to claim 1,
**characterised in that**,
during the heating-up step, the rail ends are moved, relative to one another, substantially in a manner oscillating perpendicularly to the principal-axis direction Y with the maximum moment of inertia of the cross-sectional face.

3. Method according to claim 1 or 2,
**characterised in that**,
during the heating-up step, the rail ends are moved, relative to one another, substantially in a manner oscillating perpendicularly to the principal-axis direction Y, upon which movement an oscillation with lower intensity in the direction of the principal axis Y is superimposed.

4. Method according to claim 1,
**characterised in that**,
during the heating-up step, the rail ends are moved torsionally, relative to one another, in an oscillating manner.

5. Method according to claim 4,
**characterised in that**
a torsional oscillation with a centre of rotation outside the cross-sectional faces of the rails is used.

6. Method according to claim 1,
**characterised in that**,
during the heating-up step, the rail ends are moved, relative to one another, substantially in a manner oscillating in a translatory manner perpendicularly to the principal-axis direction Y, upon which movement a torsional oscillation is superimposed.

7. Method according to one of claims 1 to 6,
**characterised in that**
at least one of the rails is fixed in such a way that its end part substantially fulfils the resonance conditions of a harmonic oscillation, at least in the case of a constrained oscillating movement.

8. Method according to claim 1, 3 or 6,
**characterised in that**
the oscillations result in superimposed figures or Lissajous figures which are constructed substantially in an area-filling manner and have the greatest expansion perpendicularly to the principal-axis direction Y with the maximum moment of inertia of the cross-sectional face.

## Revendications

1. Procédé d'assemblage métallique longitudinal de rails profilés, par exemple de rails de voie ferrée, de poutres ou similaires, par soudage par friction, dans lequel, lors d'une première étape, les faces frontales des rails sont plaquées l'une contre l'autre tout en étant déplacées l'une par rapport à l'autre pour porter les extrémités de rail à température d'assemblage, et, lors d'une seconde étape, les faces frontales sont pressées l'une contre l'autre après alignement des contours ou des sections transversales en vue d'assembler les rails, **caractérisé en ce que** lors de l'étape d'échauffement, les extrémités de rail sont déplacées l'une par rapport à l'autre selon un mouvement oscillatoire dont l'amplitude d'oscillation maximum est perpendiculaire à l'axe principal Y présentant le moment d'inertie maximum de la section transversale.

2. Procédé selon la revendication 1, **caractérisé en ce que** lors de l'étape d'échauffement, les extrémités de rail sont déplacées l'une par rapport à l'autre selon un mouvement sensiblement oscillatoire perpendiculaire à l'axe principal Y présentant le moment d'inertie maximum de la section transversale.

3. Procédé selon la revendication 1 ou la revendication 2, **caractérisé en ce que** lors de l'étape d'échauffement, les extrémités de rail sont déplacées l'une par rapport à l'autre selon un mouvement sensiblement oscillatoire perpendiculaire à l'axe principal Y, auquel est superposée une oscillation de moindre intensité dans la direction de l'axe principal Y.

4. Procédé selon la revendication 1, **caractérisé en ce que** lors de l'étape d'échauffement, les extrémités de rail sont animées d'un mouvement relatif d'oscillation de torsion.

5. Procédé selon la revendication 4, **caractérisé en ce qu'**il utilise une oscillation de torsion par rapport à un centre de rotation situé à l'extérieur des sections transversales de rail.

6. Procédé selon la revendication 1, **caractérisé en ce que** lors de l'étape d'échauffement, les extrémités de rail sont déplacées l'une par rapport à l'autre perpendiculairement à l'axe principal Y selon un mouvement oscillatoire essentiellement de translation, auquel est superposé un mouvement d'oscillation de torsion.

7. Procédé selon l'une quelconque des revendications 1 à 6, **caractérisé en ce qu'**au moins un des rails est fixé de telle sorte qu'au moins pour une oscillation contrainte, son extrémité remplit sensiblement les conditions de résonance d'une oscillation harmonique.

8. Procédé selon l'une quelconque des revendications 1, 3 ou 6, **caractérisé en ce que** les oscillations donnent des courbes ou figures de Lissajous, qui couvrent sensiblement toute la surface et dont la plus grande dimension est perpendiculaire à l'axe principal Y présentant le moment d'inertie maximum de la section transversale.
